# EUROPEAN PATENT SPECIFICATION

(11) **EP 2 592 000 B1**
(45) Date of publication and mention of the grant of the patent: **03.08.2016**
(21) Application number: 12191682.9
(22) Date of filing: 07.11.2012
(51) Int. Cl.: B64D 13/06, B64D 37/34, B64D 37/06, F28D 15/02

(54) **Fuel tank for aircraft provided with a fuel heating system, and fuel heating system for aircraft fitted with such a tank**
Kraftstofftank für Flugzeug mit einem Brennstoffheizsystem sowie Brennstoffheizsystem für ein Flugzeug mit solch einem Tank
Réservoir de carburant pour aéronef pourvu d'un système de chauffage de carburant et système de chauffage de carburant pour aéronef équipé d'un tel réservoir

(30) Priority: 08.11.2011 IT TO20111025
(43) Date of publication of application: 15.05.2013
(73) Proprietor: Leonardo S.p.A., 00195 Roma (IT)
(72) Inventor: Moscatelli, Antonio, I-10137 Torino (IT); Paternoster, Massimiliano, I-10092 Beinasco (Torino) (IT); Magaldi, Marco, I-06034 Foligno (Perugia) (IT)
(74) Representative: Rondano, Davide

(56) References cited:
- EP-A1- 0 183 343
- EP-A1- 0 537 933
- DE-C1- 3 911 655
- FR-A- 1 343 326
- GB-A- 640 293

## Description

The present invention relates to a fuel tank intended to be installed on aircrafts provided with a fuel heating system, as well as to a fuel heating system for aircrafts fitted with such a tank.

When an aircraft, be it an aircraft for civil and commercial transport or a pilotless aircraft, carries out long- or medium-haul flights at medium or high altitude, there is the probability that the fuel contained in the fuel tank (or tanks) installed on board the aircraft will cool to temperatures which render it unusable, with the consequent risk of clogging of the fuel filters and therefore of blocking of the aircraft engine (or engines). One of the main features of a fuel for aeronautical use (hereinafter indicated for brevity as "aviation fuel") is the so-called freezing point, namely the temperature at which solid particles consisting of paraffin crystals (solid hydrocarbons) begin to form in the fuel. Aviation fuels commonly used in civil aviation have freezing points of around -50°C/-60°C. Given that at medium or high altitudes the air temperature reaches values of around - 50°C/-70°C (with a probability higher than 20% above 6 thousand metres) and that a few flight hours (from 0.25 to 8 hours depending on the size of the aircraft and the arrangement of the fuel tanks), the fuel contained in the tanks of an aircraft, in particular in the tanks installed in the aircraft's wings (as these are the most exposed to cooling because, during the flight, the wings are subject to high heat dispersion that can be quantified as around 10,000 W/m² at an altitude of 7,000 m, at a speed of 100 m/s and at an external temperature of -40°C), reaches a condition of thermal equilibrium with the external environment, it follows that in the case of medium- or long- haul flights at medium or high altitudes, the temperature of the fuel contained in such tanks will reach values that are near its freezing point, if not even beyond this point. Fuel heating systems have therefore been developed and are already used on aircrafts for the purpose of ensuring that the fuel contained in the tanks, and particularly in the tanks installed in the aircraft's wings, is always maintained above the freezing point, even in the case of medium- or long- haul flights at medium or high altitudes. Such fuel heating systems typically use a hot fluid that is supplied from a hot source to the tank containing the fuel to be heated and then returns to the hot source.

FR 1 343 326 A ,which is considered being the closest prior art disclosing the preamble of claim 1, describes a fuel tank for aircrafts comprising an internal container intended to contain the fuel and an external container which completely encloses the internal container and which is spaced from it in such a way as to delimit an air space. The internal container and the external container are rigid wall containers. Housed in the air space are an electrical resistor and a coil for heating the fuel contained in the internal container where the heating, therefore, takes place by the contact of the electrical resistor and the coil with the wall of the internal container of the tank. The tank known from this document therefore gives rise to a series of drawbacks. First of all, the rigid structure of the two containers of the tank and the air space extending around the whole internal container render the tank constructively complex and difficult to install inside the aircraft's wings. Furthermore, the use of an electrical resistor and a coil passed through by a hot fluid for heating the fuel does not make it possible to obtain sufficient heat exchange efficiency for compensating the high heat dispersion to which, as said above, the aircraft's wings and therefore the fuel tanks housed inside them are subject. Finally, the use of an electrical resistor on the one hand and the use of a pump and a valve system for moving the heating fluid inside the coil on the other hand entail high energy consumption.

An object of the present invention is therefore to propose a fuel tank for an aircraft that can be used easily with any fuel heating system using a hot fluid and that makes it possible to overcome the problems of the prior art mentioned above.

This and other objects are fully achieved according to the present invention by virtue of a fuel tank for aircraft with the characteristics defined in the annexed independent claim 1. Further advantageous characteristics of the invention are indicated in the dependent claims, the content of which is to be understood as forming an integral and integrating part of the description provided hereinbelow.

In short, the invention is based on the idea of using a flexible multilayer tank as a fuel tank and to provide, between two adjacent layers of the tank, a cavity defining a path that extends along a wall of the tank between an inlet opening and outlet opening of the tank, the inlet opening and the outlet opening of the tank being intended to be put into communication respectively with a fluid supply circuit and a fluid return circuit of the fuel heating system provided on board the aircraft. By virtue of its flexible structure, the tank according to the invention can be easily installed inside the aircraft's wings, and also be easily removed. Furthermore, the fact that the tank is configured in such a way that the fluid flows directly inside the cavity, and therefore in direct contact with the innermost layer between the two adjacent layers of the tank that delimit the cavity, makes it possible to obtain high heat exchange efficiency that is several orders of magnitude greater than that obtainable in the aforementioned prior document with the contact between the coil and the wall of the internal container.

The cavity is preferably provided between two adjacent layers of the bottom wall of the tank. In this way it is always possible to guarantee the maximum heat transfer capacity from the hot fluid of the fuel heating system to the fuel contained in the tank, given that in the aircraft's normal flight attitude conditions, the fuel, although its quantity decreases over time, will always be in contact with the bottom wall of the tank.

The shape of the tank, when seen in plan view, is preferably elongated in one direction and the inlet and outlet openings are oriented in such a way that the fluid enters the tank and leaves the tank parallel to said direction.

Preferably, a spacer member is placed between the two adjacent layers of the tank delimiting the cavity, which spacer member extends parallel to said direction and acts as a separating wall which divides the delivery path from the return path of the fluid that flows through the cavity from the inlet opening to the outlet opening. The use of this spacer member provides a constructively simple solution that can be installed easily and quickly to define the path of the hot fluid in the fuel heating system.

The fuel heating system preferably comprises a two-phase fluid heat exchanger, said heat exchanger in turn comprising a first heat exchanger portion, or evaporator, containing the fluid in vapour phase, a second heat exchanger portion containing the fluid in liquid phase and a porous wall placed between the first and second heat exchanger portions, wherein the first heat exchanger portion is connected to the inlet opening of the tank for supplying the fluid in vapour phase (hot fluid) to the tank, while the second heat exchanger portion is connected to the outlet opening of the tank for the return of fluid in liquid phase (cold fluid) from the tank. The use of a two-phase fluid heat exchanger makes it possible to create a fuel heating system of the passive type, i.e. with no active components (such as pumps, valves, etc.) and therefore with no energy consumption. Pumping of the fluid from the heat exchanger to the tank is in fact obtained by virtue of the capillary thrust on the fluid in the passage through the porous wall, the energy necessary for producing said thrust being provided by the evaporation heat of the fluid used for heating the fuel contained in the tank.

The heat exchanger of the fuel heating system is preferably arranged with its first portion (evaporator) in contact with a source of heat in the aircraft.

The heat exchanger of the fuel heating system is preferably made as a two-dimensional body (in the sense that one of the three dimensions of the heat exchanger is one order of magnitude smaller than the other two) and is arranged with its first portion (evaporator) in contact with the hottest wall of a system on board the aircraft that dissipates heat (typically, though not exclusively, the avionics, namely an electric or electronic apparatus enclosed by a container that is usually of parallelepiped shape), in such a way that the heat exchanger carries out both the fuel heating function and the function of cooling the heat dissipating system at the same time.

Further characteristics and advantages of the invention will appear more clearly from the detailed description which follows and which is provided purely by way of non-limiting example, with reference to the attached drawings, in which:
Figure 1 is a section view of an aircraft wing in which is installed a fuel tank in accordance with a preferred embodiment of the present invention, taken through a vertical section plane that is perpendicular to the longitudinal direction of the wing;
Figure 2 is a section view, taken through the section line indicated II-II in Figure 1, of the fuel tank shown in said figure;
Figure 3 shows a two-phase fluid heat exchanger that is part of a fuel heating system that can be associated with the fuel tank of Figures 1 and 2; and
Figure 4 shows an example of installation of the two-phase fluid heat exchanger of Figure 3.

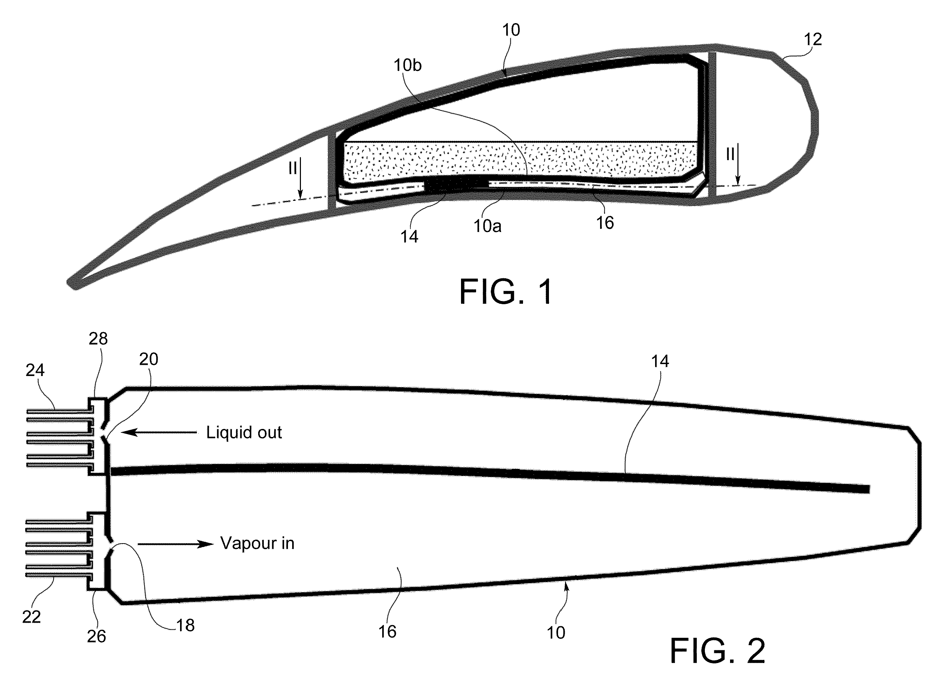

With reference initially to Figures 1 and 2, an aircraft fuel tank according to the invention (hereinafter simply referred to as tank) is generally indicated 10. In the proposed example, the tank 10 is installed inside a wing 12 of the aircraft. As already explained in the introductory part of the description, it is specifically the tanks installed in the wings of an aircraft that are most subject to the risk of freezing of the fuel. The tank 10 is made as a flexible multilayer tank and is therefore made up of a plurality of layers of material in a manner known per se. Two adjacent layers of material 10a, 10b of the tank 10 are spaced from one another, in particular by means of a spacer member 14 inserted between these two layers, in such a way that a cavity 16 is provided between the two layers 10a, 10b that defines a path extending along a wall of the tank, particularly along the bottom wall, between an inlet opening 18 and an outlet opening 20 of the tank itself intended to be put into communication respectively with a fluid supply circuit 22 and with a fluid return circuit 24 of a fuel heating system provided on board of the aircraft, as will be explained in greater detail below. In the illustrated embodiment, the shape of the tank 10, when seen in plan view, is elongated in the longitudinal direction of the wing and the inlet 18 and outlet 20 openings of the tank are oriented in such a way that the fluid used for heating the fuel enters the tank 10 and leaves it parallel to said direction. As shown in the plan view of Figure 2, the spacer member 14 extends parallel to said direction and acts as a separating wall which divides the supply path from the return path of the fluid that flows through the cavity 16 from the inlet opening 18 to the outlet opening 20. Provided near the inlet 18 and outlet 20 openings of the tank 10 are respective manifolds 26 and 28 which are connected respectively to the pipe or pipes of the fluid supply circuit 22 and of the fluid return circuit 24 of the fuel heating system.

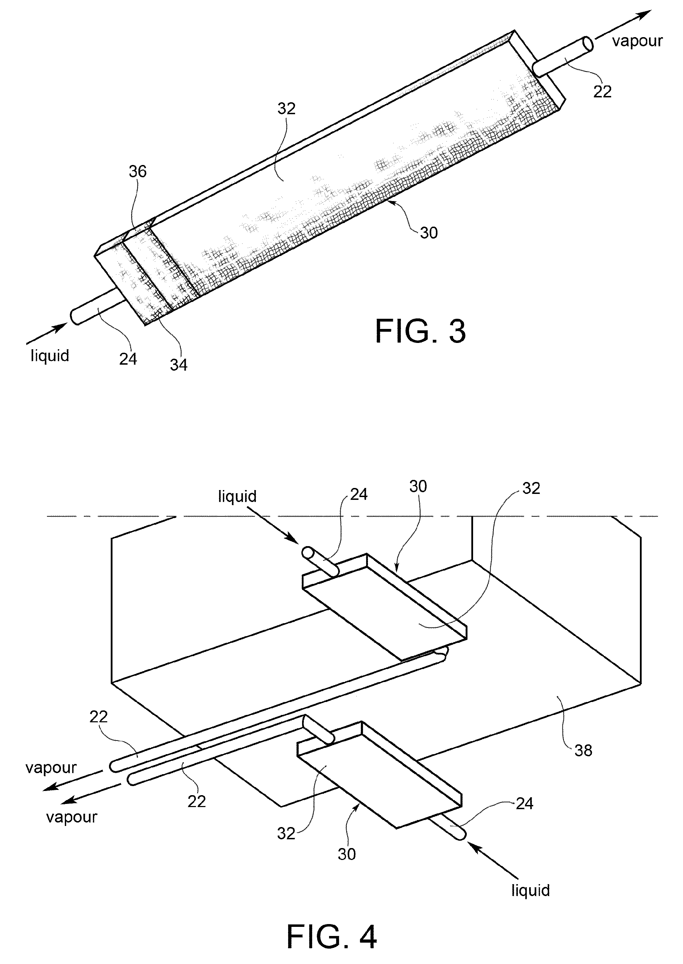

With reference now to Figures 3 and 4 as well, the fuel heating system comprises a heat exchanger 30, which is connected on one side to the manifold 26 (inlet opening 18) of the tank 10 by means of the supply circuit 22 for sending the hot fluid from the heat exchanger 30 to the tank 10 and on the other side to the manifold 28 (outlet opening 20) of the tank 10 by means of the return circuit 24 for the return of the fluid, that has cooled along the path through the cavity 16, from the tank 10 to the heat exchanger 30. The heat exchanger 30 is preferably a two-phase fluid heat exchanger and comprises a first heat exchanger portion 32, or evaporator, containing the fluid in vapour phase, a second heat exchanger portion 34 containing the fluid in liquid phase, and a porous wall 36 placed between the first and second heat exchanger portions of 32 and 34. The first heat exchanger portion 32 is connected to the manifold 26 (inlet opening 18) of the tank 10 for sending the fluid in vapour phase (hot fluid), while the second heat exchanger portion 34 is connected to the manifold 28 (outlet opening 20) of the tank 10 for the return of the fluid in liquid phase (cold fluid). The use of a two-phase fluid heat exchanger makes it possible to create a fuel heating system of the passive type, i.e. with no active components (such as pumps, valves, etc.). Pumping of the fluid from the heat exchanger 30 to the tank 10 is in fact obtained by virtue of the capillary thrust on the fluid in the passage through the porous wall 36, the energy necessary for producing said thrust being provided by the evaporation heat of the fluid used for heating the fuel contained in the tank 10. In this regard, the fluid used is preferably water, this being a fluid with a very high evaporation heat (about 2,300 kJ/kg), but of course it could also be another fluid.

The hot fluid leaving the heat exchanger 30 is then made to flow towards the manifold 26 of the tank 10 (by virtue of the capillary thrust exerted on the fluid, in the case of a two-phase fluid heat exchanger, or otherwise by means of a pump). The hot fluid (which in the case of a two-phase fluid heat exchanger is in vapour phase) then enters the cavity 16 through the inlet opening 18, flows along the entire path defined by the cavity itself, transferring heat to the fuel contained in the tank 10 through the bottom wall of the tank itself, and then leaves the tank through the outlet opening 20. In this way the cavity 16 acts as a condenser in which the fluid passes from the vapour phase to the liquid phase due to heat being transferred to the fuel contained in the tank 10. The fluid cooled in this way then returns from the manifold 28 to the heat exchanger 30 in order to be heated here once again.

As shown in Figure 4, the heat exchanger 30 is preferably arranged with its first portion 32 in contact with a heat dissipating system 38 on board of the aircraft, such as an avionics unit in particular. In this case, the heat exchanger 30 is preferably made as a flat two-dimensional body (i.e. as a body one of whose three dimensions is one order of magnitude smaller than the other two) and is arranged with its first portion 32 in contact with a wall 38 of the heat dissipating system, in such a way that the heat exchanger carries out both the fuel heating function and the function of cooling the heat dissipating system at the same time, as the heating transferred by this system is exploited to heat the fluid used for heating the fuel. As shown in Figure 4, several heat exchangers 30 (two heat exchangers in the example shown) may be provided in contact with the heat dissipating system 38.

A fuel heating system using a tank according to the invention can also be used, if the tank is installed inside a wing, to prevent the formation of ice on the edge of the wing (anti-icing function). By configuring and installing the tank in such a way that the cavity in which the hot fluid flows also extends close to the leading edge of the wing, and therefore transfers heat to this zone of the wing too, it is in fact possible to counter the formation of ice on the wing.

## Claims

1. Fuel tank (10) for aircraft made as a flexible multilayer tank, wherein a cavity (16) is provided between two adjacent layers (10a, 10b) of the tank (10) and defines a path that extends along a wall of the tank (10) between an inlet opening (18) and an outlet opening (20) of the tank (10),
**characterised in that** said path being able to be passed through by a hot fluid flowing directly inside the cavity to transfer heat to the fuel contained in the tank (10).

2. Tank according to claim 1, wherein the cavity (16) is provided between two adjacent layers (10a, 10b) of the bottom wall of the tank (10).

3. Tank according to claim 2, wherein the shape of the tank (10), when seen in plan view, is elongated in one direction and wherein the inlet (18) and outlet (20) openings are oriented in such a way that the fluid enters the tank (10) and leaves the tank (10) parallel to said direction.

4. Tank according to claim 3, wherein a spacer member (14) is placed between the two adjacent layers (10a, 10b) delimiting the cavity (16), which spacer member extends parallel to said direction and acts as a separating wall which divides the supply path from the return section of the fluid that flows through the cavity (16) from the inlet opening (18) to the outlet opening (20).

5. Fuel heating system for aircraft, comprising a fuel tank (10) according to any one of the preceding claims, a heat exchanger (30), a supply circuit (22) through which the heat exchanger (30) is connected to the inlet opening (18) of the tank (10) for supplying hot fluid from the heat exchanger (30) to the tank (10), and a return circuit (24) through which the heat exchanger (30) is connected to the outlet opening (20) of the tank (10) for the return of the fluid, cooled along the path through the cavity (16) of the tank (10), from the tank (10) to the heat exchanger (30).

6. Fuel heating system according to claim 5, wherein the heat exchanger (30) is a two-phase fluid heat exchanger and comprises a first heat exchanger portion (32) containing the fluid in vapour phase, a second heat exchanger portion (34) containing the fluid in liquid phase, and a porous wall (36) placed between the first (32) and second (34) heat exchanger portions.

7. Fuel heating system according to claim 5 or claim 6, wherein the heat exchanger (30) is made as a flat two-dimensional body in such a way as to be able to be arranged with the first heat exchanger portion (32) in contact with a wall of a heat dissipating system (38) on board of the aircraft, such as an avionics unit.

8. Fuel heating system according to any one of claims 5 to 7, wherein the tank (10) also comprises a first manifold (26) arranged near the inlet opening (18) for connection to one or more pipes of the supply circuit (22) and a second manifold (28) arranged near the outlet opening (20) for connection to one or more pipes of the return circuit (24).

## Patentansprüche

1. Kraftstofftank (10) für ein Flugzeug, der als ein flexibler Mehrschichttank gemacht ist, bei dem ein Hohlraum (16) zwischen zwei angrenzenden Schichten (10a, 10b) des Tanks (10) vorgesehen ist und einen Weg definiert, der sich entlang einer Wand des Tanks (10) zwischen einer Einlassöffnung (18) und einer Auslassöffnung (20) des Tanks (10) erstreckt,
**dadurch gekennzeichnet, dass**
besagter Weg von einem heißen Fluid, das direkt innerhalb des Hohlraums strömt, zum Übertragen von Wärme an den in dem Tank (10) enthaltenen Kraftstoff durchlaufen werden kann.

2. Tank nach Anspruch 1, bei dem der Hohlraum (16) zwischen zwei angrenzenden Schichten (10a, 10b) der Bodenwand des Tanks (10) vorgesehen ist.

3. Tank nach Anspruch 2, bei dem die Form des Tanks (10), wenn sie in Draufsicht gesehen wird, in einer Richtung länglich ist, und bei dem die Einlass-(18) und Auslass-(20)Öffnungen in einer derartigen Weise orientiert sind, dass das Fluid parallel zu besagter Richtung in den Tank (10) eintritt und aus dem Tank (10) austritt.

4. Tank nach Anspruch 3, bei dem ein Abstandsbauteil (14) zwischen den zwei angrenzenden Schichten (10a, 10b), die den Hohlraum (16) begrenzen, platziert ist, das sich parallel zu besagter Richtung erstreckt und als eine Trennwand wirkt, die den Zufuhrweg von dem Rückführbereich des Fluids, das von der Einlassöffnung (18) zu der Auslassöffnungen (20) durch den Hohlraum (16) strömt, teilt.

5. Kraftstofferwärmungssystem für ein Flugzeug, mit einem Kraftstofftank (10) nach einem der vorhergehenden Ansprüche, einem Wärmetauscher (30), einem Zufuhrkreis (22), durch den der Wärmetauscher (30) mit der Einlassöffnung (18) des Tanks (10) zum Zuführen heißen Fluids von dem Wärmetauscher (30) zu dem Tank (10) verbunden ist, und einem Rückführkreis (24), durch den der Wärmetauscher (30) mit der Auslassöffnung (20) des Tanks (10) für die Rückführung des Fluids, das entlang des Wegs durch den Hohlraum (16) des Tanks (10) gekühlt wird, von dem Tank (10) zu dem Wärmetauscher (30) verbunden ist.

6. Kraftstofferwärmungssystem nach Anspruch 5, bei dem der Wärmetauscher (30) ein zweiphasiger Fluidwärmetauscher ist und einen ersten Wärmetauscherabschnitt (32), der das Fluid in Dampfphase enthält, einen zweiten Wärmetauscherabschnitt (34), der das Fluid in flüssiger Phase enthält, und eine poröse Wand (36), die zwischen dem ersten (32) und zweiten (34) Wärmetauscherabschnitt platziert ist, aufweist.

7. Kraftstofferwärmungssystem nach Anspruch 5 oder 6, bei dem der Wärmetauscher (30) als ein flacher zweidimensionaler Körper in einer derartigen Weise gemacht ist, dass er mit dem ersten Wärmetauscherabschnitt (32) in Kontakt mit einer Wand eines wärmeabgebenden Systems (38) an Bord des Flugzeugs, wie beispielsweise einer Avionikeinheit, angeordnet werden kann.

8. Kraftstofferwärmungssystem nach einer der Ansprüche 5 bis 7, bei dem der Tank (10) auch einen ersten Verteiler (26), der nahe der Einlassöffnung (18) angeordnet ist, zur Verbindung mit einem oder mehreren Rohren des Zufuhrkreises (22) und einen zweiten Verteiler (28), der nahe der Auslassöffnung (20) angeordnet ist, zur Verbindung mit einem oder mehreren Rohren des Rückführkreises (24) aufweist.

## Revendications

1. Réservoir de carburant (10) pour aéronef fabriqué sous forme de réservoir multicouche flexible, dans lequel une cavité (16) est prévue entre deux couches adjacentes (10a, 10b) du réservoir (10) et définit un trajet qui s'étend le long de la paroi du réservoir (10) entre une ouverture d'admission (18) et une ouverture d'évacuation (20) du réservoir (10), **caractérisé en ce que** ledit trajet peut être parcouru par un fluide chaud s'écoulant directement à l'intérieur de la cavité pour transférer la chaleur au le carburant contenu dans le réservoir (10).

2. Réservoir selon la revendication 1, dans lequel la cavité (16) est prévue entre deux couches (10a, 10b) adjacentes de la paroi inférieure du réservoir (10).

3. Réservoir selon la revendication 2, dans lequel la forme du réservoir (10), lorsqu'il est vu en plan, est allongée dans une direction et dans lequel les ouvertures d'admission (18) et d'évacuation (20) sont orientées de manière à ce que le fluide pénètre dans le réservoir (10) et quitte le réservoir (10) parallèlement à ladite direction.

4. Réservoir selon la revendication 3, dans lequel un élément d'écartement (14) est placé entre les deux couches (10a, 10b) adjacentes délimitant la cavité (16), lequel élément d'écartement s'étend parallèlement à ladite direction et agit comme une cloison qui sépare le trajet d'acheminement du tronçon de retour du fluide qui s'écoule dans la cavité (16) depuis l'ouverture d'admission (18) jusqu'à l'ouverture d'évacuation (20).

5. Système de chauffage de carburant pour aéronef, comprenant un réservoir de carburant (10) selon l'une quelconque des revendications précédentes, un échangeur de chaleur (30), un circuit d'acheminement (22) par lequel l'échangeur de chaleur (30) est raccordé à l'ouverture d'admission (18) du réservoir (10) afin d'acheminer le fluide chaud depuis l'échangeur de chaleur (30) jusqu'au réservoir (10), et un circuit de retour (24) par lequel l'échangeur de chaleur (30) est raccordé à l'ouverture d'évacuation (20) du réservoir (10) pour le retour du fluide, refroidi le long du trajet dans la cavité (16) du réservoir (10), depuis le réservoir (10) jusqu'à l'échangeur de chaleur (30).

6. Système de chauffage de carburant selon la revendication 5, dans lequel l'échangeur de chaleur (30) est un échangeur de chaleur de fluide diphasique et comprend une première partie échangeuse de chaleur (32) contenant le fluide en phase vapeur, une seconde partie échangeuse de chaleur (34) contenant le fluide en phase liquide, et une paroi poreuse (36) placée entre les première (32) et seconde (34) parties échangeuses de chaleur.

7. Système de chauffage de carburant selon la revendication 5 ou la revendication 6, dans lequel l'échangeur de chaleur (30) est fabriqué sous la forme d'un corps plat en deux dimensions de manière à pouvoir être agencé avec la première partie échangeuse de chaleur (32) en contact avec la paroi d'un système dissipateur de chaleur (38) à bord de l'aéronef, par exemple une unité avionique.

8. Système de chauffage de carburant selon l'une quelconque des revendications 5 à 7, dans lequel le réservoir (10) comprend également un premier collecteur (26) agencé près de l'ouverture d'admission (18) pour être raccordé à un ou plusieurs tuyaux du circuit d'acheminement (22) et un second collecteur (28) agencé près de l'ouverture d'évacuation (20) pour être raccordé à un ou plusieurs tuyaux du circuit de retour (24).
